# EUROPEAN PATENT SPECIFICATION

(11) **EP 0 784 934 B1**
(45) Date of publication and mention of the grant of the patent: **09.07.2003**
(21) Application number: 96120176.1
(22) Date of filing: 16.12.1996
(51) Int. Cl.: A23G 9/26, A23G 9/14, A23G 9/02, A23G 9/28, A23G 9/22

(54) **Apparatus and method for making a multi-flavored frozen confection**
Verfahren und Vorrichtung zur Bereitung von gefrorenem Mehraromenkonfekt
Procédé et appareil pour la fabrication de confiserie congelée à plusieurs parfums

(30) Priority: 18.12.1995 US 574115; 18.12.1995 US 574116
(43) Date of publication of application: 23.07.1997
(73) Proprietor: White, Neal Edwin, Old Tappan, NJ 07675 (US); Margolis, Kenneth D., Rose Valley, PA 19086 (US)
(72) Inventor: White, Neal Edwin, Old Tappan, NJ 07675 (US); Margolis, Kenneth D., Rose Valley, PA 19086 (US)
(74) Representative: Harrison, Michael Charles

(56) References cited:
- EP-A- 0 558 247
- EP-A- 0 589 820
- EP-A- 0 642 899
- WO-A-94/12046
- WO-A-95/32633
- DE-A- 1 757 951
- DE-A- 2 243 542
- DE-C- 252 099
- DE-C- 537 058
- GB-A- 1 145 854
- GB-A- 2 005 125
- GB-A- 2 135 437
- US-A- 1 472 229
- US-A- 1 949 772
- US-A- 2 670 696
- US-A- 2 747 525
- US-A- 2 975 732
- US-A- 4 369 200
- US-A- 4 426 402
- US-A- 4 986 080
- US-A- 5 343 710
- US-A- 5 374 436
- US-A- 5 426 836
- US-A- 5 582 856
- PATENT ABSTRACTS OF JAPAN vol. 009, no. 241 (C-306), 27 September 1985 & JP 60 098947 A (FUJI NIYUUGIYOU KK), 1 June 1985

## Description

### BACKGROUND OF THE INVENTION

This invention pertains to apparatus and methods for making frozen confections, and, more particularly, to apparatus and methods for making frozen confections having a plurality of differently flavored or colored sections. The subject matter of U.S. Patent No. 5,374,436, which issued on December 20, 1994 to the same inventors, is incorporated herein by reference.

Apparatus for manufacturing frozen confections generally comprises a plurality of molds affixed to a conveyor or rotary table for moving the molds through various processing stations. These stations conventionally comprise: (a) a filling station where the molds are filled with ingredients in liquid form; (b) a stick-inserting station where sticks are inserted into the molds; (c) a freezing station where the molds are subjected to temperatures below freezing to cause solidification of the liquid ingredients; and (d) a product-withdrawing station where the frozen confections are removed from the molds. As a final step, in some cases, the frozen confections are dipped into a bath comprising the ingredients of a coating (e.g., chocolate).

Frozen confections comprising more than one flavor or color also are known. U.S. Patent No. 2,747,525 to Lund discloses a method and apparatus for manufacturing such a product. In Lund, the molds are filled with a first ingredient in liquid form and then immersed in a brine solution having a temperature below freezing. Before the inner core of the product freezes, this portion is vacuumed out of the mold. A second ingredient in liquid form then is injected into the mold, and the mold again is immersed in the brine solution. The resultant product is a frozen confection comprising an outer layer of one flavor or color and an inner core of a second flavor or color. Using the Lund System, however, the second flavor or color is not visible to the consumer, except at the product's base.

U.S. Patent No. 3,971,853 to Crowder discloses an apparatus and method for making a frozen confection having a plurality of different flavors or colors. Crowder, however, uses a complicated arrangement of nozzles for filling the molds which deliver different ingredients to the molds in a semi-liquid state. Using the Crowder system, moreover, the ingredients are intermingled such that the different flavors or colors do not form distinct sections.

U.S. Patent No. 1,429,405 to Carter *et al*. discloses a method for making a frozen confection having a plurality of differently flavored or colored sections. In Carter, a dye or punch is used to remove a portion of the frozen confection after the frozen confection is removed from the mold. The resultant cavity then is filled with an ingredient, in liquid form, having a different flavor or color, and the entire product then is subjected to additional freezing. This method is ill-suited for mass production.

U.S. Patent No. 2,674,960 to DePasquale. discloses a method for making a frozen confection having a plurality of different flavors or colors. Following partial filling of a first mold with a first ingredient, a second, smaller mold is inserted into the first mold to cause the first ingredient to fill the space between the two molds. The first ingredient then is frozen and the second mold is removed. The resultant cavity in the product then is partially filled with a second ingredient, and the same steps are repeated using a yet smaller mold. Using the DePasquale system, only the first flavor or color is visible to the consumer.

U.S. Patent No. 4,986,080 to Grigoli discloses an apparatus and method for making a frozen confection having a plurality of different flavors or colors. The Grigoli method, however, requires substantial modifications to conventional, frozen-confection manufacturing apparatuses. The Grigoli apparatus operates on a double-step principle in which rows of molds advance two-by-two. A first filling unit fills a first row of molds but skips the subsequent second row of molds. The ingredients within the molds of the first row then are frozen and, at a first removal and inserting station, the frozen products are removed from these first molds and inserted into the molds of the second row. The second molds have a cross-section such that when the frozen product is inserted into the second molds, space remains between the product and the inner walls of the second molds at least some locations. A second ingredient in liquid form then is inserted into the second molds to fill these spaces. In a variation of this process disclosed in U.S. Patent No. 5,343,710 to Cathenaut *et al*., the second molds are partially filled with the second ingredient before the frozen products are inserted into the second molds. In either case, the second molds are transmitted to a second freezing station, and then to a final withdrawal station where the final product is withdrawn. This double-step method substantially complicates, and increases the expense, of manufacturing a frozen confection.

U.S. Patent No. 4,188,768 to Getman discloses an apparatus for producing a frozen confection comprising a paper-covered comestible cone containing ice cream. In order to prevent the cones from getting soggy, the interior of the cones is completely covered with a liquid chocolate composition. The chocolate is mixed with compressed air and sprayed through nozzles placed above the cones. The chocolate forms a continuous, liquid-impervious film. The confection is later chilled to solidify the ice cream and the sprayed chocolate.

JP 60098947 discloses a process for obtaining an ice candy having a pattern by stamping that pattern into a frozen layer using a hot stamp.

### SUMMARY OF THE INVENTION

The present invention provides an apparatus and method for making a frozen confection having a plurality of distinct, visible, differently flavored or colored sections. Applicants' system and method use conventional, ice cream making equipment and require only the addition of stations to this equipment.

In an embodiment of Applicants' system and method, molds for a frozen-confection product are partially filled with a first ingredient for a first flavor or color. A solid or hollow male tool having fixed protrusions for contacting the inner surface of the mold is then inserted into each mold, displacing the first ingredient into the passageways between the protrusions. Alternatively, a male tool is placed in each mold before filling the mold with a first ingredient or ingredients. Each mold is then advanced to a freezing station where the first ingredient is frozen. In the alternative, insertion of the first ingredient or ingredients into the molds occurs at a freezing station. Following freezing of the first ingredient, each mold is advanced to a tool withdrawal station, where the male tool is heated and withdrawn from the mold. Second ingredient or ingredients are then added and frozen, creating on the outer surface of the frozen confection a visible pattern of distinct flavors or colors.

An advantage of the present invention is that each line of molds affixed to the conveyor or rotary table of a frozen-confection manufacturing machine produces final products during a single cycle through the machine. This is an advantage over the prior art two-step systems disclosed in U.S. Patent Nos. 4,986,080 and 5,343,710 where final products are produced only by every other line of molds which cycle through the machine. The present system, therefore, requires less floor space and fewer molds.

### BRIEF DESCRIPTION OF THE DRAWINGS

FIG. 1 is a partial functional block diagram of a frozen confection manufacturing system using a male tool in accordance with a fourth embodiment of the invention;
FIG. 2 is a partial functional block diagram of a frozen confection manufacturing system using a male tool in accordance with a variation of the embodiment shown in FIG. 1;
FIG. 3 is a partial perspective view of a male tool and a partially formed frozen confection in accordance with the embodiments shown in FIGS. 1 and 2;
FIG. 4 is a partial perspective view of another male tool in accordance with the embodiments of FIGS. 1 and 2.

### DETAILED DESCRIPTION OF THE PREFERRED EMBODIMENTS

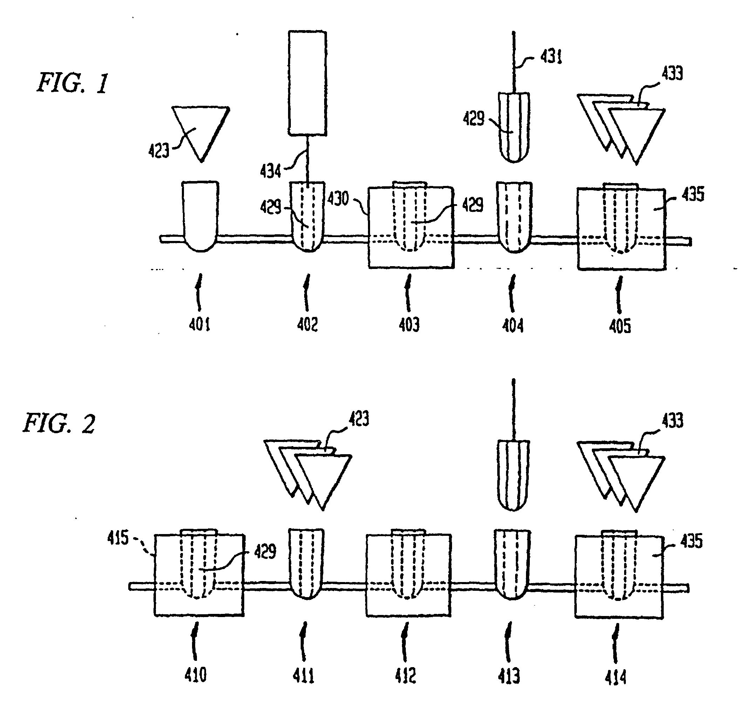

In an embodiment of the invention shown in FIGS. 1-4, a male tool is inserted into a mold before the first ingredient is frozen in the mold. The first ingredient can be inserted into the mold either before or after insertion of a male tool. FIG. 1 is a schematic representation of the first stations of a process in an in-line or rotary ice cream making machine according to this embodiment. At metering station 401, a filling unit 423 inserts a first ingredient in liquid form into the mold. The mold is only partially filled.

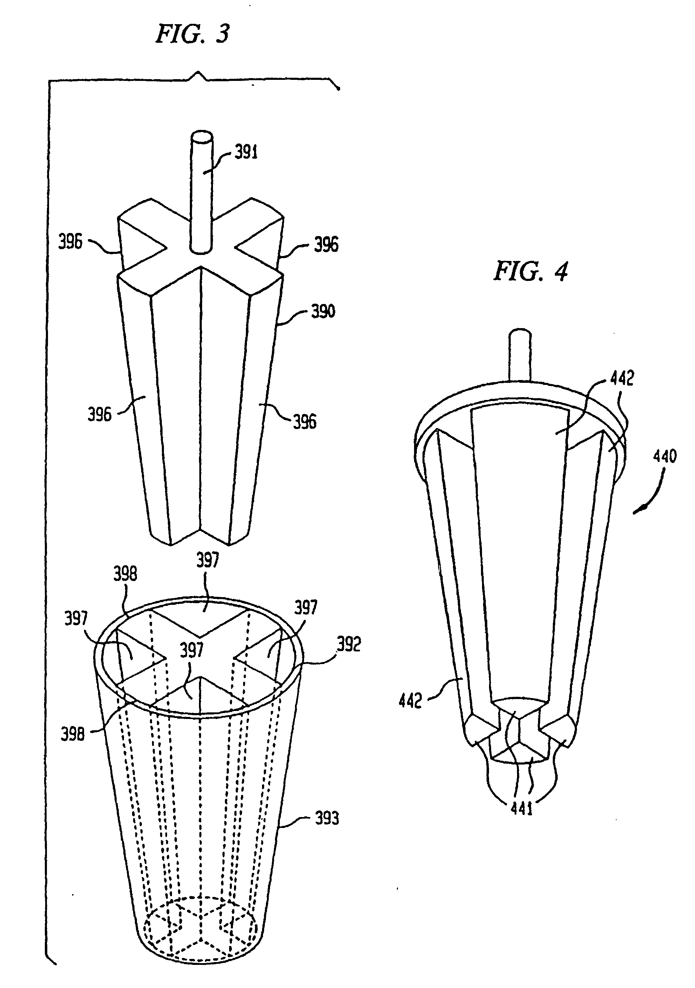

The molds are then transported to the tool insertion station 402, where the male tool 429 is inserted into the mold using robotic arm 434. The male tool has a geometry such that, upon this insertion, the male tool's outer surfaces contact the inner surfaces of the mold. For example, the male tool 390 shown in FIG. 3 has surfaces 396 that contact the inner surface 392 of the mold 393 when the tool is inserted into the mold. As the male tool is inserted into the mold, the liquid first ingredient is restricted to portions 397 of the mold not occupied by the male tool 390. Relatively little or no first ingredient remains at the interfaces between the outer surfaces 396 of the male tool and the mold inner surface 392.

Returning to FIG. 1, the mold, together with the male tool 429 and the first ingredient, are transported to a freezing station 403, where the first ingredient is frozen in freezing tank 430. The mold is then transported to a tool removal station 404. The tool may be heated at this station by chemical means, by conducting electricity through the mold, and/or by using an external electric heater. Heat also may be applied by raising the environmental temperature surrounding the molds; e.g., by using hot water. The tool is heated sufficiently to release any first ingredient frozen to its surface, but not so much as to significantly thaw the remaining first ingredient in the mold. The male tool 429 is then removed using, for example, a robotic arm 431 similar to arm 434. The frozen first ingredient remains in the mold, forming a pattern on the mold inner surface.

The mold is then transported to a metering station 405 where additional ingredients, different in flavor and/or color from the first ingredient, are added to the mold. The additional ingredients fill the sections 398 (FIG. 3) within the mold left by the male tool. The additional ingredients are preferably added within a freezing tank 435 in order that the additional ingredients freeze quickly and stay relatively separate from the first ingredient. Where a male tool such as tool 390 (FIG. 3) is used, a single, continuous passageway remains after removing the tool. Only a single metering device 433 is used, therefore, to add a single additional ingredient to fill this passageway.

In an alternative embodiment, a male tool 440 (FIG. 4), having multiple male elements 441 is used. Each element has an external surface 442 for contacting the inside wall of the mold. Each male element 441 leaves a separate lengthwise section in the frozen first ingredient after the tool is removed. In that case, the metering device 433 (FIG. 1) may comprise multiple filling elements for introducing a plurality of ingredients, each having a different color and/or flavor, into the plurality of passageways 441.

After leaving the metering station 433, the mold continues through a further manufacturing system including a stick-inserting station, a freezing station and a product withdrawing station.

In an alternative embodiment of the invention shown in FIG. 2, the male tool 429 is first placed in the mold at a tool insertion station 410. The external surfaces of the male tool contact the inner surface of the mold. The surfaces of the tool and the inner surface of the mold form one or more sections within the mold. Preferably, a freezing tank 415 at the tool insertion station chills the mold, causing the tool to adhere to the inner surface of the mold as surface condensation freezes, sealing the contact surfaces. The mold, together with the male tool, is then transferred to metering station 411, where a first ingredient is inserted in liquid form into the mold, filling the sections. If a male tool, such as tool 390 (FIG. 3) is used, the multiple sections 397 formed by the male tool and the mold's inner wall are distinct and separate.. Each section, therefore, may be filled with a different ingredient having a different color and/or flavor. In yet another embodiment, multiple ingredients may be layered vertically within each section by alternate steps of filling and freezing. In other words, one or more sections may be partially filled with one ingredient, caused to freeze, partially filled with a second ingredient, caused to freeze, etc.

The mold, the male tool and the ingredients therein then are transferred to a freezing station 412, where the ingredients are frozen, and to a tool removal station 413, where the freezing is stopped and the male tool 429 is heated and removed as explained above. The mold, containing the frozen first ingredients forming a pattern on the inner surface of the mold, is transferred to a second metering station 414 where an additional ingredient is added to fill the mold. Alternatively, multiple ingredients also may be added at this station in layers, as explained above, or to separately fill multiple separate, distinct sections within the mold (if such exist as a result of the male tool's structure).

## Claims

1. A method for making a frozen confection having a plurality of differently flavored or colored sections, comprising:
(a) providing a mold;
(b) providing a first body having fixed surfaces or protrusions at its outer periphery;
(c) inserting said first body into said mold such that said fixed surfaces or protrusions are substantially in contact with the inner wall of said mold to thereby create a first space bounded by said first body and said mold;
(d) inserting a first liquid comprising ingredients of a first flavor or color into said mold either before step (c) or after step (c), whereby when said step is carried out after step (c), said first liquid is inserted into said first space in said mold;
(e) freezing said first liquid to form a substantially frozen first outer layer
(f) withdrawing said first body from said mold;
(g) inserting a second liquid comprising ingredients of a second flavor or color into said mold; and
(h) freezing said second liquid.

2. The method of claim 1, further comprising the steps of:
(a) inserting a third liquid comprising ingredients of a third flavor or color into said mold on top of said first frozen layer;
(b) freezing said third liquid.

3. The method of claim 1, further comprising the steps of:
(a) inserting a third liquid comprising ingredients of a third flavor or color into said mold on top of said frozen second ingredients;
(b) freezing said third liquid.

4. The method of claim 1, wherein said step of providing said first body includes providing said first body with a plurality of male elements for forming a plurality of lengthwise passageways within said frozen first outer layer, and said step of inserting said second liquid includes inserting said second liquid into a first one of said passageways, and further comprising the steps of:
(a) inserting a third liquid comprising ingredients of a third flavor or color into a second one of said passageways; and
(b) freezing said third liquid.

5. The method of claim 1, further comprising the step of heating said first body before withdrawing said first body from said mold.

6. The method of claim 1, wherein said step of inserting said first body into said mold includes creating a second space bounded by said fixed surfaces or protrusions, said body and said inner surface, said second space being substantially independent of said first space, and further comprising the steps of inserting a third liquid comprising ingredients of a third flavor or color into said second space; and freezing said third liquid.

7. A system for making a frozen confection having a plurality of differently flavored or colored sections, comprising:
(a) means for inserting a first liquid into a mold;
(b) a body having fixed surfaces at its outer periphery;
(c) means for inserting said first body into said mold such that said fixed surfaces are substantially in contact with said inner wall;
(d) means for freezing said first liquid to form a substantially frozen first outer layer surrounding said fixed surfaces;
(e) means for withdrawing said body from said mold;
(f) means for inserting a second liquid into said mold; and
(g) means for freezing said second liquid.

8. The system of claim 7, further, comprising means for chilling said body and said mold to below 0°C (32°F) before inserting said first liquid.

9. The system of claim 7, wherein said system further comprises a heater for heating said body.

10. The system of claim 9, wherein said heater is an electrical heater.

11. The system of claim 9, wherein said heater is a chemical heater.

## Patentansprüche

1. Verfahren zum Herstellen von gefrorenem Konfekt mit verschiedenen Geschmacks- oder Farbabschnitten, das umfasst:
(a) Herstellen einer Form;
(b) Herstellen eines ersten Körpers mit festen Oberflächen oder Vorsprüngen am Außenrand;
(c) Einfügen des ersten Körpers in die Form, so dass die festen Oberflächen oder Vorsprünge im Wesentlichen die Innenwand der Form berühren, so dass ein erster Zwischenraum gebildet wird, der durch den ersten Körper und die Form begrenzt wird;
(d) Einfüllen einer ersten Flüssigkeit mit Zutaten für einen Geschmack oder eine Farbe erster Art in die Form entweder vor Schritt (c) oder nach Schritt (c), wobei bei Ausführung dieses Schrittes nach Schritt (c) die erste Flüssigkeit in den ersten Zwischenraum in der Form eingefüllt wird;
(e) Einfrieren der ersten Flüssigkeit, so dass sich eine im Wesentlichen gefrorene erste Außenschicht bildet;
(f) Entfernen des ersten Körpers aus der Form;
(g) Einfüllen einer zweiten Flüssigkeit mit Zutaten für einen Geschmack oder eine Farbe zweiter Art in die Form und
(h) Einfrieren der zweiten Flüssigkeit.

2. Verfahren nach Anspruch 1 mit den weiteren Schritten:
(a) Einfüllen einer dritten Flüssigkeit mit Zutaten für einen Geschmack oder eine Farbe dritter Art in die Form oben auf der ersten gefrorenen Schicht;
(b) Einfrieren der dritten Flüssigkeit.

3. Verfahren nach Anspruch 1 mit den weiteren Schritten:
(a) Einfüllen einer dritten Flüssigkeit mit Zutaten für einen Geschmack oder eine Farbe dritter Art in die Form oben auf die gefrorenen zweiten Zutaten;
(b) Einfrieren der dritten Flüssigkeit.

4. Verfahren nach Anspruch 1, bei dem das Herstellen des ersten Körpers die Herstellung des ersten Körpers mit mehreren männlichen Elementen zum Erzeugen von mehreren länglichen Durchgängen in der gefrorenen ersten Außenschicht beinhaltet und das Einfüllen der zweiten Flüssigkeit die Einfüllung der zweiten Flüssigkeit in einen ersten der Durchgänge beinhaltet, das die weiteren Schritte umfasst:
(a) Einfüllen einer dritten Flüssigkeit mit Zutaten für einen Geschmack oder eine Farbe einer dritten Art in einen zweiten der Durchgänge und
(b) Einfrieren der dritten Flüssigkeit.

5. Verfahren nach Anspruch 1 mit dem weiteren Schritt Aufheizen des ersten Körpers vor dem Entfernen des ersten Körpers aus der Form.

6. Verfahren nach Anspruch 1, bei dem das Einfügen des ersten Körpers in die Form das Erzeugen eines zweiten Zwischenraumes zwischen den festen Oberflächen oder Vorsprüngen, dem Körper und der Innenfläche, wobei der zweite Zwischenraum im Wesentlichen unabhängig von dem ersten Zwischenraum ist, das als weitere Schritte umfasst Einfüllen einer dritten Flüssigkeit mit Zutaten für einen Geschmack oder eine Farbe einer dritten Art in den zweiten Zwischenraum und Einfrieren der dritten Flüssigkeit.

7. System zum Herstellen von gefrorenem Konfekt mit mehreren unterschiedlichen Geschmacks- oder Farbabschnitten mit:
(a) einer Vorrichtung zum Einfüllen einer ersten Flüssigkeit in eine Form;
(b) einem Körper mit festen Oberflächen an seinem Außenrand;
(c) einer Vorrichtung zum Einfügen des ersten Körpers in die Form, so dass die festen Oberflächen im Wesentlichen die Innenwand berühren;
(d) einer Vorrichtung zum Einfrieren der ersten Flüssigkeit, um eine im Wesentlichen gefrorene erste Außenschicht um die festen Oberflächen zu bilden;
(e) einer Vorrichtung zum Entfernen des Körpers aus der Form;
(f) einer Vorrichtung zum Einfüllen einer zweiten Flüssigkeit in die Form und
(g) einer Vorrichtung zum Einfrieren der zweiten Flüssigkeit.

8. System nach Anspruch 7, das außerdem eine Vorrichtung zum Kühlen des Körpers und der Form bis unter 0°C (32°F) vor dem Einfüllen der ersten Flüssigkeit umfasst.

9. System nach Anspruch 7, wobei das System außerdem eine Heizvorrichtung zum Aufheizen des Körpers umfasst.

10. System nach Anspruch 9, bei dem die Heizvorrichtung eine elektrische Heizvorrichtung ist.

11. System nach Anspruch 9, bei dem die Heizvorrichtung eine chemische Heizvorrichtung ist.

## Revendications

1. Procédé de fabrication d'une pâtisserie congelée ayant plusieurs tronçons d'arômes ou de couleurs différents, comprenant :
(a) la mise à disposition d'un moule,
(b) la mise à disposition d'un premier corps ayant des surfaces ou saillies fixes à sa périphérie externe,
(c) l'insertion du premier corps dans le moule afin que les surfaces ou saillies fixes soient pratiquement au contact de la paroi interne du moule et créent ainsi un premier espace délimité par le premier corps et le moule,
(d) l'insertion d'un premier liquide comprenant les ingrédients d'un premier arôme ou d'une première couleur dans le moule soit avant soit après l'étape (c), si bien que, lorsque l'étape est exécutée après l'étape (c), le premier liquide est inséré dans le premier espace dans le moule,
(e) la congélation du premier liquide pour la formation d'une première couche externe pratiquement congelée,
(f) l'extraction du premier corps du moule,
(g) l'insertion d'un second liquide contenant des ingrédients d'un second arôme ou d'une seconde couleur dans le moule, et
(h) la congélation du second liquide.

2. Procédé selon la revendication 1, comprenant en outre les étapes suivantes :
(a) l'insertion d'un troisième liquide qui contient des ingrédients d'un troisième arôme ou d'une troisième couleur dans le moule sur la première couche congelée, et
(b) la congélation du troisième liquide.

3. Procédé selon la revendication 1, comprenant en outre les étapes suivantes :
(a) l'insertion d'un troisième liquide contenant des ingrédients d'un troisième arôme ou d'une troisième couleur dans le moule sur les seconds ingrédients solides congelés, et
(b) la congélation du troisième liquide.

4. Procédé selon la revendication 1, dans lequel l'étape de mise à disposition du premier corps comprend la mise à disposition du premier corps afin qu'il comporte plusieurs éléments mâles destinés à former plusieurs passages longitudinaux dans la première couche externe congelée, et l'étape d'insertion du second liquide comprend l'insertion du second liquide dans un premier des passages, et comprenant en outre les étapes suivantes :
(a) l'insertion d'un troisième liquide comprenant des ingrédients d'un troisième arôme ou d'une troisième couleur dans un second des passages, et
(b) la congélation du troisième liquide.

5. Procédé selon la revendication 1, comprenant en outre l'étape de chauffage du premier corps avant l'extraction du premier corps du moule.

6. Procédé selon la revendication 1, dans lequel l'étape d'insertion du premier corps dans le moule comprend la création d'un second espace délimité par les surfaces ou saillies fixes, le corps et la surface interne, le second espace étant pratiquement indépendant du premier espace, et comprenant en outre des étapes d'insertion d'un troisième liquide comprenant des ingrédients d'un troisième arôme ou d'une troisième couleur dans le second espace, et de congélation du troisième liquide.

7. Système de fabrication d'une pâtisserie congelée ayant plusieurs tronçons d'arômes ou de couleurs qui diffèrent, comprenant :
(a) un dispositif d'insertion d'un premier liquide dans un moule,
(b) un corps ayant des surfaces fixes à sa périphérie externe,
(c) un dispositif d'insertion du premier corps dans le moule afin que les surfaces fixes soient pratiquement au contact de la paroi interne,
(d) un dispositif de congélation du premier liquide pour la formation d'une première couche externe pratiquement congelée qui entoure les surfaces fixes,
(e) un dispositif d'extraction du corps du moule,
(f) un dispositif d'insertion d'un second liquide dans le moule, et
(g) un dispositif de congélation du second liquide.

8. Système selon la revendication 7, comprenant en outre un dispositif de refroidissement du corps et du moule au-dessous de 0 °C (32 °F) avant l'insertion du premier liquide.

9. Système selon la revendication 7, dans lequel le système comporte en outre un organe de chauffage du corps.

10. Système selon la revendication 9, dans lequel l'organe de chauffage est un organe électrique de chauffage.

11. Système selon la revendication 9, dans lequel l'organe de chauffage est un organe de chauffage chimique.
